# FASCICULE DE BREVET EUROPEEN

(11) **EP 3 626 966 B1**
(45) Date de publication et mention de la délivrance du brevet: **28.07.2021**
(21) Numéro de dépôt: 19197855.0
(22) Date de dépôt: 17.09.2019
(51) Int. Cl.: F03G 6/00, F01K 3/18, F01K 3/12, F01K 3/26, F01K 25/10, F22B 1/00, G21D 1/02, G21D 9/00

(54) **SYSTÈME ET PROCÉDÉ DE PRODUCTION D'ÉNERGIE ÉLECTRIQUE PAR CYCLE THERMODYNAMIQUE À PARTIR D'ÉNERGIE SOLAIRE ET D'ÉNERGIE NUCLÉAIRE**
SYSTEM UND VERFAHREN ZUR ERZEUGUNG VON ELEKTRISCHER ENERGIE DURCH EINEN THERMODYNAMISCHEN ZYKLUS MIT SONNEN- UND KERNENERGIE
SYSTEM AND METHOD FOR PRODUCING ELECTRICAL ENERGY BY THERMODYNAMIC CYCLE FROM SOLAR ENERGY AND NUCLEAR ENERGY

(30) Priorité: 18.09.2018 FR 1858406
(43) Date de publication de la demande: 25.03.2020
(73) Titulaire: Commissariat à l'Energie Atomique et aux Energies Alternatives, 75015 Paris (FR)
(72) Inventeur: PHAM, Quynh Trang, 38054 Grenoble Cedex 9 (FR); TAUVERON, Nicolas, 38054 Grenoble Cedex 9 (FR)
(74) Mandataire: Brizio Delaporte, Allison

(56) Documents cités:
- US-A- 3 943 719
- US-A1- 2006 266 039
- US-A1- 2015 096 299

## Description

### DOMAINE TECHNIQUE DE L'INVENTION

L'invention concerne le domaine de la production d'énergie mécanique, voire électrique, flexible et hybride, à partir d'énergie solaire et nucléaire.

Elle trouve une application particulièrement avantageuse dans des unités de production électrique ou de cogénération électricité-frigories déployables où l'utilisation du solaire thermique et du nucléaire est possible.

### ÉTAT DE LA TECHNIQUE

La recherche d'énergie alternative aux énergies fossiles a conduit à des déploiements à grande échelle d'énergie renouvelable (principalement éolienne et solaire photovoltaïque). Ce déploiement se fait de manière intermittente et variable ce qui pose de sérieux défis sur la réglementation du réseau. La pénétration rapide des énergies renouvelables a obligé les centrales de base (principalement au charbon et au nucléaire) à réduire leur production ce qui a entraîné des prix d'électricité négatifs en période de forte production éolienne ou solaire. Ce qui n'est pas souhaitable pour poursuivre les investissements dans ces domaines.

L'énergie solaire à concentration (CSP pour Concentration Solar Plant en anglais) intégrant un stockage d'énergie thermique (TES pour Thermique Energy Storage en anglais) peut fournir une production d'électricité continue et réglable, indépendamment de l'intermittence de la lumière du soleil. Le TES actuellement mis en service soutient les centrales CSP pour maintenir la production nominale pendant plus de 15 h ce qui indique que ces centrales CSP pourraient produire une production d'énergie 24/7 pendant les temps froids. Cependant, les usines CSP actuelles peuvent encore devoir faire face à des arrêts non désirés lorsqu'ils rencontrent des journées sans soleil continues.

Une solution plus efficace consiste à ajouter des sources d'énergie complémentaires pour construire un système d'énergie hybride (HES pour Hybride Energy System).

On connait des systèmes hybrides permettant de combiner deux sources de chaleur l'une nucléaire et l'autre solaire soit pour la stocker, soit pour la convertir en énergie mécanique puis en énergie électrique.

Le document US 20060266039 A1 décrit une système hybride solaire-nucléaire selon le préambule de la revendication 1.

En outre, le document US 20150096299 A1 décrit une hybridation solaire-nucléaire faite selon le principe suivant : un réacteur nucléaire à eau pressurisée permet de chauffer l'eau d'un cycle thermodynamique et de la vaporiser partiellement. Celle-ci reçoit ensuite une partie de la chaleur issue de la source solaire (via un stockage de chaleur à haute température) puis est détendue dans une turbine haute pression, puis réchauffée par une autre partie de la chaleur issue de la source solaire (qui a été stockée) et est détendue dans une turbine basse pression, puis condensée avant d'être renvoyée vers un échangeur qui reçoit la chaleur du réacteur nucléaire. La production d'énergie mécanique par la turbine est réalisée par un cycle de Rankine.

Cette unité présente l'inconvénient d'utiliser des modules solaires et nucléaires à hautes températures. Ainsi, pour surchauffer l'eau après son passage dans le réacteur nucléaire, la source solaire doit être plus chaude pour assurer un chauffage de l'eau. Or, ces modules sont couteux à fabriquer et à faire fonctionner, notamment le réacteur nucléaire et le stockage à haute température. De plus, le cycle de production d'énergie mécanique par cycle de Rankine doit être complexe pour être efficace, notamment par la présence de plusieurs sous-tirages sur la turbine basse pression influençant négativement sur le cout et la taille de l'unité hybride. Ces inconvénients limitent le développement de ce type d'unité.

Il existe donc le besoin de proposer une solution qui facilite le développement d'unité hybride pour la production d'électricité qui s'affranchisse des énergies fossiles.

### RÉSUMÉ DE L'INVENTION

Pour atteindre cet objectif, selon un mode de réalisation, la présente invention prévoit un système de production d'énergie électrique comprenant
- un circuit de production d'énergie électrique par cycle thermodynamique destiné à recevoir un fluide de travail et comprenant avantageusement une turbine,
- un premier circuit de production de chaleur à partir d'énergie solaire destiné à recevoir un premier fluide caloporteur et comprenant des capteurs solaires thermiques,
- un deuxième circuit de production de chaleur à partir d'énergie nucléaire destiné à recevoir un deuxième fluide caloporteur et comprenant un réacteur nucléaire, et
- un premier échangeur thermique agencé entre le premier circuit et le circuit de production d'énergie électrique configuré pour transférer la chaleur produite par le premier circuit au circuit de production d'énergie électrique, et
- un deuxième échangeur thermique agencé entre le deuxième circuit et le circuit de production d'énergie électrique configuré pour transférer la chaleur produite par le deuxième circuit au circuit de production d'énergie électrique.

Selon l'invention, le deuxième échangeur thermique est agencé, sur le circuit de production d'énergie électrique, en aval du premier échangeur de sorte que la chaleur du premier circuit serve à préchauffer le fluide de travail avant son passage dans le deuxième échangeur. Avantageusement, le système comprend : une machine à absorption agencée entre le premier circuit et le circuit de production d'énergie électrique, et avantageusement un troisième échangeur thermique agencé entre la machine à absorption et le circuit de production d'énergie électrique en aval de la turbine de sorte à transformer au moins une partie de la chaleur produite par le premier circuit en source froide pour le troisième échangeur thermique. Avantageusement, le troisième échangeur thermique est agencé sur le circuit de production d'énergie électrique et la machine à absorption est agencé entre entre le premier circuit et le circuit de production d'énergie électrique par le troisième échangeur thermique Ainsi, La machine à absorption est agencée sur le circuit de production d'énergie électrique en aval de la turbine par l'intermédiaire d'un troisième échangeur thermique. Préférentiellement, la machine à absorption comporte un générateur agencé, directement ou indirectement, sur le premier circuit fluidique.

Le système selon l'invention permet de faire fonctionner un cycle thermodynamique de production d'énergie électrique à partir de deux sources de chaleur que sont le solaire et le nucléaire et avantageusement sans faire intervenir d'énergie fossile. En outre, l'utilisation de chaleur solaire pour préchauffer le fluide du cycle thermodynamique avant son chauffage par le réacteur nucléaire permet de prévoir un réacteur nucléaire de petite puissance, avantageusement inférieure ou égale à 600MWth. Ce type de réacteur est ainsi facilement fabricable de manière modulaire. Le réacteur nucléaire est ainsi en fonction de manière optimale, son utilisation est constante et préférentiellement maximale ce qui est économiquement plus performant.

De plus, le système utilise avantageusement, au moins une partie de la chaleur solaire pour la production de frigories et donc pour générer une source froide utilisable par le cycle thermodynamique du circuit de production d'énergie électrique. Ce qui est particulièrement pertinent dans des régions au climat chaud avec notamment des températures diurnes chaudes où les sources de refroidissement pour les échangeurs peuvent être limitantes.

Le système selon l'invention permet d'utiliser la chaleur de l'énergie solaire de manière optimale pour de manière alternative ou cumulative préchauffer le fluide de travail avant le chauffage par énergie nucléaire et/ou pour produire des frigories.

Préférentiellement, le circuit de production d'électricité est configuré pour mettre en œuvre un cycle de Brayton avec comme fluide de travail du dioxyde de carbone supercritique (sCO2). Le cycle de Brayton permet de limiter la consommation d'eau du système par rapport notamment au cycle de Rankine utilisé dans l'état de la technique. Les machines sont aussi plus compactes avec le sCO2. Il n'y a pas de problème de gouttelettes de liquide lors de la détente du fluide de travail dans la turbine.

Suivant un autre aspect, la présente invention concerne un procédé d'utilisation d'un système tel que décrit ci-dessus comprenant les étapes suivantes :
a. Préchauffage du fluide de travail par le premier circuit de production de chaleur par énergie solaire pour atteindre une première température de consigne pour le deuxième circuit,
b. Chauffage du fluide de travail par le deuxième circuit de production de chaleur par énergie nucléaire pour atteindre une deuxième température de consigne pour la turbine,
c. Détente du fluide de travail par la turbine,
d. Refroidissement du fluide de travail par la source froide générée par la machine à absorption à partir d'au moins une partie de la chaleur produite par le premier circuit,
e. Compression du fluide de travail par un compresseur.

Avantageusement, la première température de consigne est inférieure à la deuxième température de consigne. Préférentiellement, la première température de consigne est inférieure ou égale à 200°C et/ou la deuxième température de consigne est supérieure à 200 ° et inférieure ou égale à 300°C.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré à la figure d'accompagnement suivante:

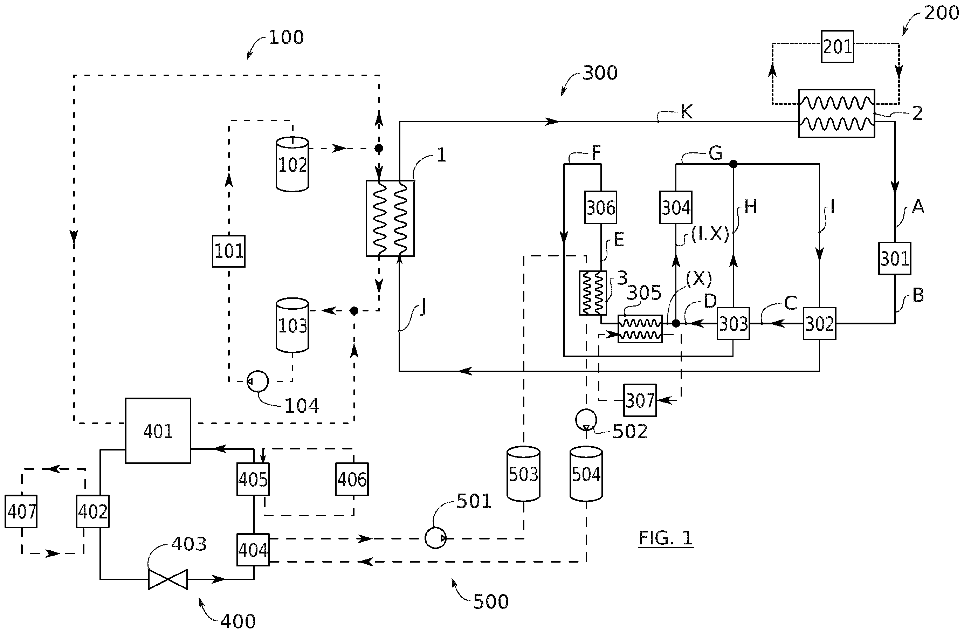

La FIGURE 1 est un schéma du système selon l'invention.

Le dessin est donné à titre d'exemples et n'est pas limitatif de l'invention. Il constitue une représentation schématique de principe destinée à faciliter la compréhension de l'invention et ne sont pas nécessairement à l'échelle des applications pratiques.

### DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement :
- Avantageusement, le circuit de production d'énergie électrique est un cycle de Brayton et comprend comme fluide de travail du dioxyde de carbone supercritique.
- Avantageusement, le premier circuit comprend un réservoir de stockage du premier fluide caloporteur froid agencé en amont des capteurs solaires thermiques et/ou un réservoir de stockage du premier fluide caloporteur chauffé agencé en aval des capteurs solaires thermiques.

Les sources d'énergies renouvelables comme le solaire sont intermittentes. Le système selon l'invention permet donc d'assurer une utilisation flexible. Les réservoirs de chaud et/ ou de froid permettent d'assurer un stockage temporaire. Par exemple, lorsqu'il y a production d'énergie solaire thermique, mais pas de besoin de production d'énergie électrique, la chaleur issue des capteurs solaires thermiques est stockée dans un réservoir de stockage. De la même manière, le premier fluide caloporteur peut être stocké avant son passage au travers de capteurs solaires thermiques.

La présence de stockage permet de faire fonctionner le réacteur nucléaire à une puissance stable préférentiellement à 100% ce qui présente un avantage économique notable.

Suivant une possibilité, le réservoir de stockage du premier fluide caloporteur froid et/ou le réservoir de stockage du premier fluide caloporteur chauffé sont distincts.

Suivant une possibilité alternative, le réservoir de stockage du premier fluide caloporteur froid et/ou le réservoir de stockage du premier fluide caloporteur chauffé sont réunis en un seul et même contenant de sorte que le stockage du premier fluide caloporteur froid et le stockage du premier fluide caloporteur chauffé se fasse dans un seul contenant suivant une répartition par couche stratifiée de type thermocline. Cette disposition permet de gagner en compacité du système
- Avantageusement, le système comprend un circuit intermédiaire agencé entre la machine à absorption et le circuit de production d'énergie électrique.

Avantageusement, le circuit intermédiaire comprend le troisième échangeur thermique,
- Avantageusement, le circuit intermédiaire comprend un module de stockage de froid,
Cette disposition assure le stockage des frigories lorsque le circuit de production d'énergie électrique n'a pas besoin de refroidissement.

Le module de stockage de froid peut être avantageusement surdimensionné de sorte à pouvoir valoriser les frigories non utilisées en les vendant.

Avantageusement, le circuit intermédiaire est destiné à recevoir un fluide caloporteur intermédiaire.

Avantageusement, la machine à absorption comprend un évaporateur et le circuit intermédiaire est agencé entre l'évaporateur et le troisième échangeur thermique.

Avantageusement, le module de stockage de froid comprend un réservoir de stockage du fluide caloporteur intermédiaire froid agencé en amont de l'évaporateur et/ou un réservoir de stockage du fluide caloporteur intermédiaire refroidi agencé en aval de l'évaporateur. Suivant une possibilité, le réservoir de stockage du fluide caloporteur intermédiaire froid et/ou le réservoir de stockage du fluide caloporteur intermédiaire refroidi sont distincts.

Suivant une possibilité alternative, le réservoir de stockage du fluide caloporteur intermédiaire froid et/ou le réservoir de stockage du fluide caloporteur intermédiaire refroidi sont réunis en un seul et même contenant de sorte que le stockage du fluide caloporteur intermédiaire froid et le stockage du fluide caloporteur intermédiaire refroidi se fasse dans un seul contenant suivant une répartition par couche stratifiée de type thermocline. Cette disposition permet de gagner en compacité du système
- Avantageusement, la machine à absorption comprend un générateur utilisant directement ou indirectement comme source chaude au moins en partie le premier fluide caloporteur du premier circuit. On entend par directement que le fluide caloporteur du premier circuit circule directement dans le générateur ; et on entend par indirectement qu'un circuit intermédiaire est agencé entre le premier circuit et la machine à absorption, plus spécifiquement entre un échangeur thermique agencé sur le premier circuit et un générateur de la machine à absorption.

Avantageusement, au moins une source chaude du générateur de la machine à absorption est le premier fluide caloporteur du premier circuit.
- Avantageusement, le générateur est agencé sur le premier circuit, préférentiellement en aval des capteurs solaires thermiques, c'est à dire que le premier fluide caloporteur circule dans les capteurs solaires puis directement ou indirectement dans le générateur avant de retourner, directement ou indirectement, vers les capteurs solaires.
- Avantageusement, le générateur est agencé sur le premier circuit en parallèle du premier échangeur.
- Avantageusement, le réacteur nucléaire est un réacteur de puissance inférieure ou égale à 600 MWth.

Avantageusement, le système est configuré pour que le fluide de travail présente une température maximale en entrée de la turbine inférieure ou égale à 300°C.
- Avantageusement, le premier circuit de production de chaleur est configuré pour fonctionner à des températures inférieures ou égales à 200°C.

Le système permet avantageusement d'utiliser des capteurs solaires à basse température ainsi que des stockages basses températures plus facilement mises en œuvre que ceux à hautes températures.
- Avantageusement, le système comprend une turbine agencée sur la machine à absorption destinée à produire un travail mécanique en vue de la production d'électricité. Préférentiellement, la turbine est une turbine à vapeur d'ammoniac. La turbine peut être placée en série ou parallèle sur la machine à absorption.

La turbine permettrait de produire de l'électricité en plus ou à la place des frigories lorsque celles-ci ne sont pas nécessaires. Un tel agencement ajoute à la fois de la flexibilité et aussi une performance nominale accrue en terme de rendement électrique. Un rendement supérieur de 1 à 2 points pourrait être obtenu.

Avantageusement, le premier circuit est un circuit fermé.

Avantageusement, le deuxième circuit est un circuit fermé.

Avantageusement, le circuit de production d'énergie électrique est un
circuit fermé.

Avantageusement, le circuit intermédiaire est un circuit fermé.

L'usage de l'article indéfini " un " ou " une " pour un élément ou une étape n'exclut pas, sauf mention contraire, la présence d'une pluralité, soit 2 au plus, de tels éléments ou étapes.

Dans la présente description, l'expression « A fluidiquement raccordé à B» est synonyme de "A est en connexion fluidique avec B" ne signifie pas nécessairement qu'il n'existe pas d'organe entre A et B. Les expressions "agencée sur" ou "sur" sont synonymes de "raccordé fluidiquement à".

L'amont et l'aval en un point donné sont pris en référence au sens de circulation du fluide dans le circuit.

Le système selon l'invention comprend un circuit de production d'énergie électrique 300 par un cycle thermodynamique.

Un cycle thermodynamique permet par des transformations successives dans un système thermodynamique de produire un travail mécanique grâce à des transferts thermiques avec l'extérieur du système notamment des sources chaudes et des sources de refroidissement. Avantageusement, le système selon l'invention comprend un module de transformation d'énergie mécanique produite en énergie électrique.

Selon l'invention, le circuit de production d'énergie électrique 300 de la présente invention utilise comme source chaude de l'énergie thermique issue de l'énergie solaire et de l'énergie nucléaire.

Le circuit de production d'énergie électrique 300 comprend au moins une turbine 301 destinée à détendre un fluide de travail fournissant une énergie cinétique convertie en énergie mécanique. La turbine 301 est avantageusement associée à un module de transformation d'énergie mécanique en énergie électrique tel qu'un compresseur ou un alternateur par exemple.

Le circuit de production d'énergie électrique 300 est configuré pour recevoir un fluide de travail. Le fluide de travail est choisi pour être apte à changer de phase dans les conditions d'utilisation du système selon l'invention.

Avantageusement, le circuit de production d'énergie électrique 300 est configuré pour mettre en œuvre un cycle de Brayton. Selon un mode de réalisation préféré, le fluide de travail est du dioxyde de carbone supercritique (sCO₂). Le cycle de Brayton réduit la consommation d'eau par rapport au cycle de Rankine utilisé classiquement. Le cycle de Brayton est parcouru par un fluide à l'état gazeux qui est successivement comprimé par un compresseur 304, chauffé par une source chaude, détendu dans la turbine 301, puis refroidi et à nouveau comprimé. Avantageusement, le compresseur 304 est alimenté par la turbine 301, préférentiellement le compresseur 304 est placé sur l'axe de la turbine 301. En outre, ce fluide présente des avantages notables lors de son utilisation dans un cycle thermodynamique, par exemple un système utilisant le sCO₂ sont aussi plus compactes qu'avec l'eau, il n'y a pas de problème de gouttelettes de liquide lors de la détente du fluide de travail dans la turbine. Par rapport à des fluides de synthèse, les caractéristiques environnementales de sCO₂ (potentiel de réchauffement, couche d'ozone, toxicité, inflammabilité) sont excellentes, et son coût est très faible.

Le circuit de production d'énergie électrique nécessite au moins une source de chaleur destinée à chauffer le fluide de travail avant son passage dans la turbine 301.

Selon l'invention, une des sources de chaleur pour le système selon l'invention est l'énergie solaire avantageusement captée par un premier circuit de production de chaleur 100. Le premier circuit de production de chaleur 100 comprend des capteurs solaires thermiques 101 de types capteurs plans vitrés, ou non, ou des capteurs à tubes sous vide. Les capteurs solaires thermiques 101 sont également dénommés champ solaire ou bien encore centrale solaire thermique. Le premier circuit 100 est configuré pour recevoir un premier fluide caloporteur. Les capteurs solaires thermiques 101 selon l'invention sont configurés pour produire de l'énergie thermique basse et moyenne température. On entend par basse et moyenne température que la température du premier fluide caloporteur est égale ou inférieure à 200°C, préférentiellement 120 à 200°C. L'invention ne concerne pas la technologie solaire thermique dite à haute température avec des températures de fluide caloporteur supérieure à 200°C et pouvant aller jusqu'à 1000°C. Les capteurs solaires utilisés dans le cadre de la technologie haute température sont des miroirs cylindro-paraboliques, des capteurs linéaires de Fresnel ainsi que des réflecteurs paraboliques. Les capteurs solaires thermiques 101 sont destinés à chauffer le premier fluide caloporteur. Le premier fluide caloporteur est choisi selon les conditions d'utilisation du système. Préférentiellement, le premier fluide caloporteur est choisi pour être efficace comme fluide pour le stockage thermique. À titre d'exemple, le premier fluide caloporteur est de l'eau pressurisée ou une huile thermique.

Le premier circuit 100 comprend avantageusement une pompe 104 destinée à mettre en circulation le premier fluide caloporteur dans le circuit.

Selon un mode de réalisation, le premier circuit 100 comprend au moins un réservoir 102 agencé en aval des capteurs thermiques solaires 101 et destiné à stocker le premier fluide caloporteur issu des capteurs thermiques solaires 101, c'est-à-dire le premier fluide caloporteur chauffé.

Selon un mode de réalisation, le premier circuit 100 comprend au moins un réservoir 103 agencé en amont des capteurs thermiques solaires 101 et destiné à stocker le premier fluide caloporteur avant son passage par les capteurs thermiques solaires 101, c'est-à-dire le premier fluide caloporteur non chauffé.

Le premier circuit 100 comprend selon la figure 1 un premier fluide caloporteur circulant. Suivant le sens de circulation du premier fluide, le premier circuit comprend le réservoir 103 de stockage du premier fluide caloporteur non chauffé qui est avantageusement connecté fluidiquement à la pompe 104 qui est connectée fluidiquement aux capteurs thermiques solaires 101 qui sont connectés fluidiquement au réservoir 102 de stockage du premier fluide caloporteur chauffé qui est connecté à un premier échangeur thermique 1 décrit ci-après et assurant le transfert thermique du premier circuit 100 vers le circuit de production d'énergie électrique 300, le premier échangeur thermique 1 est connecté au réservoir 103. À titre d'exemple, le premier fluide caloporteur présente une température en entrée des capteurs solaires 101 de 125°C et une température en sortie des capteurs solaires 101 de 149°C pour une pression constante en entrée et en sortie égale à 20 MPa.

Selon l'invention une deuxième source de chaleur pour le système selon l'invention est l'énergie nucléaire avantageusement utilisée dans un deuxième circuit 200 de production de chaleur à partir d'énergie nucléaire.

Le deuxième circuit 200 comprend un réacteur nucléaire 201. A titre préféré, le réacteur nucléaire 201 est choisi pour être un réacteur nucléaire de faible puissance. Le réacteur nucléaire 201 est avantageusement choisi pour produire une puissance thermique inférieure ou égale à 600MWth. Le réacteur nucléaire 201 est configuré pour fonctionner à une température inférieure ou égale à 300°C. Le réacteur nucléaire 201 est un réacteur modulaire de petite taille dénommé en anglais SMR pour Small Modular Reactor. Le réacteur nucléaire 201 est configuré pour produire de la vapeur d'eau à une température inférieure ou égale à 300°C. À titre d'exemple, la vapeur d'eau présente une température en entrée du réacteur nucléaires 201 de 149°C et une température en sortie du réacteur nucléaires 201 de 255°C pour une pression constante en entrée et en sortie égale à 3MPa.

Le système selon l'invention comprend avantageusement un premier échangeur thermique 1 destiné à transférer la chaleur du premier circuit 100 vers le circuit de production d'énergie électrique 300. Le premier échangeur 1 est avantageusement agencé sur le premier circuit 100 et sur le circuit de production d'énergie électrique 300 de sorte que le premier fluide caloporteur échange son énergie thermique avec le fluide de travail.

Le système selon l'invention comprend avantageusement un deuxième échangeur thermique 2 destiné à transférer la chaleur du deuxième circuit 200 vers le circuit de production d'énergie électrique 300. Le deuxième échangeur 2 est avantageusement agencé sur le deuxième circuit 200 et sur le circuit de production d'énergie électrique 300 de sorte que le deuxième fluide caloporteur échange son énergie thermique avec le fluide de travail. Le réacteur nucléaire 201 produit de la vapeur d'eau qui circule dans le deuxième échangeur 2 pour transférer son énergie thermique vers le fluide de travail.

Selon l'invention, le premier échangeur 1 est agencé sur le circuit de production d'énergie électrique en amont du deuxième échangeur de chaleur 2. De sorte que l'énergie solaire préchauffe le fluide de travail dans le circuit de production d'énergie électrique 300 avant le chauffage par l'énergie nucléaire. La préchauffe du fluide de travail est une relève de température qui permet de hisser la température du fluide de travail à une valeur d'entrée préconisée pour le bon fonctionnement du réacteur nucléaire 201.

Avantageusement, le premier échangeur 1 est agencé entre la turbine 301 et le deuxième échangeur 2, plus précisément entre le dernier composant du cycle de Brayton agencé en aval de la turbine et le deuxième échangeur 2. Le deuxième échangeur 2 est agencé entre le premier échangeur 1 et la turbine 301.

Avantageusement, la température de fonctionnement du premier circuit est inférieure à la température de fonctionnement du deuxième circuit de sorte que l'énergie solaire assure uniquement une préchauffe du fluide de travail. Préférentiellement, l'énergie solaire est utilisée uniquement en préchauffe du fluide de travail avant le chauffage par le deuxième circuit 200. Préférentiellement, l'énergie solaire n'est pas utilisée après le chauffage par le deuxième circuit 200 et avant la turbine 301.

De manière avantageuse, le système comprend une machine à absorption 400 destinée à transformer l'énergie thermique solaire en frigories.

Une machine à absorption 400 pour la production de froid comprend un absorbeur 405, un générateur 401, un condenseur 402, un évaporateur 404 et un circuit de circulation fluidique apte à recevoir une solution de travail comprenant avantageusement un fluide frigorigène et un absorbant, le circuit fluidique reliant le générateur 401 au condenseur 402, le condenseur 402 à l'évaporateur 404, l'évaporateur 404 à l'absorbeur 405 et l'absorbeur 405 au générateur 401 avantageusement dans laquelle :
∘ le générateur 401 est configuré pour vaporiser le fluide frigorigène de la solution de travail par transfert de chaleur d'une source de chaleur comprenant selon l'invention au moins en partie l'énergie thermique solaire du premier circuit 100,
∘ avantageusement, le condenseur 402 est configuré pour condenser le fluide frigorigène à l'état de vapeur issu du générateur 401, selon une possibilité, le condenseur 402 échange avec une source de refroidissement 407 pouvant être de l'air ou de l'eau,
∘ l'évaporateur 404 est configuré pour vaporiser le fluide frigorigène issu du condenseur 402 par transfert de chaleur d'une source de chaleur secondaire et produire une énergie frigorifique,
∘ avantageusement, l'absorbeur 405 est configuré pour condenser le fluide frigorigène à l'état de vapeur issu de l'évaporateur 404 pour permettre son absorption par la solution de travail, selon une possibilité, l'absorbeur 405 échange avec une source de refroidissement 406 pouvant être de l'air ou de l'eau.

Selon une possibilité illustrée en figure 1, la machine à absorption 400 comprend un détendeur 403 agencé entre le condenseur 402 et l'évaporateur 404.

Le fluide de travail de la machine à absorption est par exemple le NH3/ H2O.

Selon l'invention, la machine à absorption 400 est agencée de sorte que le générateur 401 utilise comme source de chaleur, au moins une partie de la chaleur solaire captée par le premier circuit 100. Avantageusement, le générateur 401 est agencé sur le premier circuit 100 en aval des capteurs solaires thermiques 101 et préférentiellement en aval du réservoir 102 de stockage de chaleur. Avantageusement, le générateur est agencé en parallèle du premier échangeur 1. Le générateur 401 est agencé, directement ou indirectement par l'intermédiaire d'un circuit intermédiaire, sur le premier circuit 100.

Selon un mode de réalisation de l'invention, la source de chaleur secondaire fournissant de l'énergie à l'évaporateur 404 provient d'un circuit intermédiaire 500. Le circuit intermédiaire assure la connexion thermique entre la machine à absorption 400, plus précisément l'évaporateur 404, et un troisième échangeur thermique 3 agencé sur le circuit de production d'énergie électrique 300, préférentiellement en aval de la turbine 301. Le circuit intermédiaire 500 est destiné à recevoir un fluide caloporteur intermédiaire à titre d'exemple de l'eau à l'état liquide.

Selon un mode de réalisation, le circuit intermédiaire 500 comprend un module de stockage de froid. À titre d'exemple, le module de stockage de froid comprend au moins un réservoir 503, 504 agencé entre l'évaporateur 404 et le troisième échangeur thermique 3 pour stocker le fluide caloporteur intermédiaire. Préférentiellement, le module de stockage comprend au moins un réservoir 504 destiné à stocker le fluide caloporteur intermédiaire entre le troisième échangeur thermique 3 et l'évaporateur 404 et/ou un au moins un réservoir 503 destiné à stocker le fluide caloporteur intermédiaire entre l'évaporateur 404 et le troisième échangeur thermique 3. Le stockage dans le réservoir 503 étant à plus basse température que le réservoir 504. À titre d'exemple, le fluide caloporteur intermédiaire est à température ambiante entre le troisième échangeur 3 et l'évaporateur 404 et donc dans le réservoir 504 et à une température comprise entre 3°C et 7°C, préférentiellement 5°C entre l'évaporateur 404 et le troisième échangeur 3 et donc dans le réservoir 503.

Le circuit intermédiaire comprend au moins une pompe 501, 502 pour mettre en circulation le fluide caloporteur intermédiaire dans le circuit. Tel qu'illustré, le circuit comprend deux pompes, une pompe 501 agencée entre l'évaporateur 404 et le réservoir 503 et une pompe 501 agencée entre le troisième échangeur thermique 3 et le réservoir 504.

Le troisième échangeur thermique 3 est préférentiellement agencé sur le circuit de production d'énergie électrique 300 entre des récupérateurs 302, 303 et un compresseur 306. Ce troisième échangeur thermique 3 a pour rôle d'abaisser la température du fluide de travail après passage dans la turbine 301 et préférentiellement après des récupérateurs 302 et avant son entrée dans le compresseur 306.

L'évaporateur 404 transfère la chaleur du fluide caloporteur intermédiaire vers le fluide de travail de la machine à absorption 400 assurant ainsi le refroidissement du fluide caloporteur intermédiaire.

Selon l'invention, le circuit de production de chaleur par énergie solaire répartit en parallèle, l'énergie thermique pour le préchauffage du fluide de travail du circuit de production d'énergie électrique 300 et pour la machine à absorption 500.

Le circuit de production d'énergie électrique 300 comprend les composants d'un cycle de Brayton utilisant comme fluide de travail du dioxyde de carbone supercritique comprenant une turbine 301 reliée à une génératrice d'électricité, la turbine 301 est connectée fluidiquement à un récupérateur haute température (HTR) 302 lui-même connecté fluidiquement à un récupérateur basse température (LTR) 303. Ces récupérateurs permettent d'augmenter le rendement du cycle. Le récupérateur basse température (LTR) 303 est connecté fluidiquement à au moins un échangeur thermique 3, 305, préférentiellement deux échangeurs thermiques en série 3, 305. L'échangeur thermique 305 traversé en premier par le fluide de travail permet un refroidissement assuré par un circuit relié à une source extérieure de refroidissement 307. L'échangeur thermique 305 traversé ensuite est refroidi par une source froide alimentée par la machine à absorption 400, plus précisément par le circuit intermédiaire 500. L'échangeur thermique 305 est connecté fluidiquement à un compresseur 306 destiné à comprimer le fluide de travail. Le compresseur 306 est connecté fluidiquement au récupérateur basse température 303. Le récupérateur basse température 303 est connecté fluidiquement au récupérateur haute température 302. Le récupérateur haute température 302 est connecté fluidiquement au premier échangeur thermique 1. Le premier échangeur thermique 1 est connecté fluidiquement au deuxième échangeur thermique 2 qui est lui-même connecté fluidiquement à la turbine 301.

Le système selon l'invention comprend un module de pilotage comprenant des vannes de contrôles destinées la circulation des différents fluides des différents circuits. Avantageusement, le module de pilotage est configuré pour commander le passage du premier fluide issu des capteurs thermiques solaires 101 soit dans le premier échangeur 1, soit dans le générateur 401 de la machine à absorption, soit à répartir entre le fluide entre les deux en fonction des besoins du système.

Le schéma de la figure 1 illustrant un mode de réalisation préféré de l'invention est ci-après décrit.

Le fluide de travail du circuit de production d'énergie électrique 300 est chauffé au contact des sources chaudes constituées par le premier échangeur de chaleur 1 et le deuxième échangeur de chaleur 2 respectivement reliés aux capteurs thermiques solaires 101, préférentiellement via un réservoir de stockage de chaleur 102 et au réacteur nucléaire 201. Le fluide de travail arrive en entrée de la turbine 301, chaud et sous pression (Point A). Le fluide de travail est détendu dans la turbine 301 (Point B) générant un travail mécanique. La turbine 301 est reliée à une génératrice d'électricité assurant la production d'électricité. Afin d'augmenter le rendement du cycle le fluide de travail traverse un échangeur récupérateur 302 (HTR). Le fluide de travail cède une partie de sa chaleur (État C) au profit du fluide de travail ayant été refroidi (Point I). Puis le fluide de travail traverse un deuxième échangeur récupérateur 303 (LTR), Point D). En sortant de l'échangeur récupérateur 303 (LTR, Point D), une partie du débit (X) du fluide de travail est destinée à être refroidie et une partie du débit (1-X) du fluide de travail est soustraite au débit principal et n'est pas refroidie.

La partie (1-X) moins refroidie est envoyée vers un compresseur de recompression (304) puis réintégrée après cette compression à la partie de débit (X) sortant du récupérateur 303. Le rapport de débits entre ces deux lignes est variable.

La partie du débit (X) à refroidir passe successivement dans deux échangeurs de refroidissement 305, 3 en série (jusqu'au point E), le premier échangeur 305 permettant un refroidissement assuré par un circuit relié à la source extérieure de refroidissement 307 ; le second étant un échangeur 3 relié à la source froide alimentée par les frigories de la machine à absorption 400 et du stockage de liquide froid 501. Le fluide de travail ainsi refroidi est comprimé dans un compresseur 306 jusqu'au Point F. Le fluide de travail ainsi comprimé en passe dans le secondaire du récupérateur 303 précédemment mentionné pour être réchauffé, par le fluide de travail provenant du récupérateur 303 en provenant de la turbine 301. A la sortie du récupérateur 303 (Point H), la partie du débit (1-X) non refroidi sortant du compresseur 304 est collectée et mélangée à la partie du débit (X) sortant du récupérateur 303. Le fluide de travail circule alors dans le secondaire du récupérateur 302 où il est réchauffé par le fluide de travail provenant de la turbine 301. En sortant du secondaire du récupérateur 302 le fluide est réchauffé par les sources chaudes (à partir du Point J) successivement par le premier échangeur 1 (Point K) et le deuxième échangeur 2.

### Exemple 1 :

Une évaluation basée sur des hypothèses simplificatrices (pertes de charge négligées, état stationnaire) a été réalisée. Les rendements et efficacités ont été supposés constants ; les valeurs sont indiquées dans le tableau suivant:

| | |
|---|---|
| Rendement_récupérateur_HTR 302 | 0,95 |
| Rendement_récupérateur_LTR 303 | 0,95 |
| Rendement_compresseur_MC 306 | 0,89 |
| Rendement_compresseur_RC 304 | 0,89 |
| Rendement_turbine 301 | 0,93 |
| COP_machine absorption 400 | 0,6 |

Cette estimation a permis d'aboutir aux détails d'une configuration décrite dans les tableaux suivants au regard de la figure 1 :

**Résultats de calcul (température, pression)**

| Points | Pressure (MPa) | Température (C) |
|---|---|---|
| A | 20 | 255 |
| B | 5,22 | 129 |
| C | 5,22 | 115,8 |
| D | 5,22 | 22,35 |
| E | 5,22 | 5 |
| F | 20 | 17,43 |
| G | 20 | 134,7 |
| H | 20 | 103,9 |
| I | 20 | 115,1 |
| J | 20 | 122,4 |
| K | 20 | 149 |

**Résultats de calcul**

| | | |
|---|---|---|
| Réacteur nucléaire 201 | 159933 | kWt |
| Panneaux solaires 101 (en crête) | 86257 | kWt |
| Turbine 301 | 105270 | kW |
| Compresseur MC 306 | 11620 | kW |
| Compresseur RC 304 | 27244 | kW |
| Puissance nette | 66406 | kWe |
| Taux de recompression (X) | 0,6085 | - |

### REFERENCES

1. Premier échangeur thermique
2. Deuxième échangeur thermique
3. Troisième échangeur thermique

100. Premier circuit de production de chaleur
101. Capteurs solaires thermiques
102. Réservoir chaud
103. Réservoir Froid
104. Pompe

200. Deuxième circuit de production de chaleur
201. Réacteur nucléaire

300. Circuit de production d'énergie électrique
301. Turbine
302. Récupérateur haute température (HTR)
303. Récupérateur basse température (LTR)
304. Compresseur de recompression (RC)
305. Echangeur thermique
306. Compresseur principal
307. Source refroidissement

400. Machine à absorption
401. Générateur
402. Condenseur
403. Vanne
404. Evaporateur
405. Absorbeur
406. Source de refroidissement
407. Source de refroidissement
500. Circuit intermédiaire
501. Pompe
502. Pompe
503. Réservoir eau très froide
504. Réservoir eau froide

## Revendications

1. Système de production d'énergie électrique comprenant
- un circuit de production d'énergie électrique (300) par cycle thermodynamique destiné à recevoir un fluide de travail et comprenant une turbine (301),
- un premier circuit (100) de production de chaleur à partir d'énergie solaire destiné à recevoir un premier fluide caloporteur et comprenant des capteurs solaires thermiques (101),
- un deuxième circuit (200) de production de chaleur à partir d'énergie nucléaire destiné à recevoir un deuxième fluide caloporteur et comprenant un réacteur nucléaire (201), et
- un premier échangeur thermique (1) agencé entre le premier circuit (100) et le circuit de production d'énergie électrique (300) configuré pour transférer la chaleur produite par le premier circuit (100) au circuit de production d'énergie électrique (300), et
- un deuxième échangeur thermique (2) agencé entre le deuxième circuit (200) et le circuit de production d'énergie électrique (300) configuré pour transférer la chaleur produite par le deuxième circuit (200) au circuit de production d'énergie électrique (300), oú le deuxième échangeur thermique (2) est agencé sur le circuit de production d'énergie électrique (300) en aval du premier échangeur (1) de sorte que la chaleur du premier circuit (100) serve à préchauffer le fluide de travail avant son passage dans le deuxième échangeur (2), **caractérisé en ce que** le système comprend un troisième échangeur thermique (3) agencé sur le circuit de production d'énergie électrique (300) en aval de la turbine (301) et une machine à absorption (400) agencée entre le premier circuit (100) et le circuit de production d'énergie électrique (300) par le troisième échangeur thermique (3), la machine à absorption comprenant un générateur agencé sur le premier circuit (100) de sorte à transformer la chaleur produite par le premier circuit (100) en source froide pour le troisième échangeur thermique (3) .

2. Système selon la revendication précédente dans lequel le circuit de production d'énergie électrique (300) est un cycle de Brayton et comprend comme fluide de travail du dioxyde de carbone supercritique.

3. Système selon l'une quelconque des revendications précédentes dans lequel le premier circuit (100) comprend un réservoir de stockage (103) du premier fluide caloporteur froid agencé en amont des capteurs solaires thermiques (101) et/ou un réservoir de stockage (102) du premier fluide caloporteur chauffé agencé en aval des capteurs solaires thermiques (101).

4. Système selon l'une quelconque des revendications précédentes comprenant un circuit intermédiaire (500) agencé entre la machine à absorption (400) et le circuit de production d'énergie électrique (300), le circuit intermédiaire (500) comprenant un module de stockage de froid.

5. Système selon la revendication précédente dans lequel au moins une source chaude du générateur (401) de la machine à absorption (400) est le premier fluide caloporteur du premier circuit (100).

6. Système selon la revendication précédente dans lequel le générateur (401) est agencé sur le premier circuit (100) en aval des capteurs solaires thermiques (101).

7. Système selon l'une quelconque des deux revendications précédentes dans lequel le générateur (401) est agencé sur le premier circuit (100) en parallèle du premier échangeur (1).

8. Système selon l'une quelconque des revendications précédentes dans lequel le réacteur nucléaire (201) est un réacteur de puissance inférieure ou égale à 600 MWth.

9. Système selon l'une quelconque des revendications précédentes dans lequel le premier circuit (100) de production de chaleur est configuré pour fonctionner à des températures inférieures ou égales à 200°C

10. Système selon l'une quelconque des revendications précédentes comprenant une turbine agencée sur la machine à absorption (400) destinée à produire un travail mécanique en vue de la production d'électricité.

11. Procédé d'utilisation d'un système selon l'une quelconque des revendications précédentes comprenant les étapes suivantes :
a. Préchauffage du fluide de travail par le premier circuit (100) de production de chaleur par énergie solaire pour atteindre une première température de consigne pour le deuxième circuit (200),
b. Chauffage du fluide de travail par le deuxième circuit (200) de production de chaleur par énergie nucléaire pour atteindre une deuxième température de consigne pour la turbine (301),
c. Détente du fluide de travail par la turbine (301),
d. Refroidissement du fluide de travail par la source froide générée par la machine à absorption (400) à partir d'au moins une partie de la chaleur produite par le premier circuit (100),
e. Compression du fluide de travail par un compresseur (306, 304).

12. Procédé d'utilisation selon la revendication précédente dans lequel la première température de consigne est inférieure à la deuxième température de consigne.

13. Procédé d'utilisation selon l'une quelconque des deux revendications précédentes dans lequel la première température de consigne est inférieure ou égale à 200°C et/ou la deuxième température de consigne est supérieure à 200 ° et inférieure ou égale à 300°C.

## Patentansprüche

1. System zur Erzeugung von elektrischer Energie, umfassend
- einen Kreislauf zur Erzeugung von elektrischer Energie (300) durch thermodynamischen Zyklus, der dazu bestimmt ist, ein Arbeitsfluid aufzunehmen, und eine Turbine (301) umfassend,
- einen ersten Kreislauf (100) zur Erzeugung von Wärme aus Sonnenenergie, der dazu bestimmt ist, ein erstes Wärmeträgerfluid aufzunehmen, und solarthermische Kollektoren (101) umfassend,
- einen zweiten Kreislauf (200) zur Erzeugung von Wärme aus Kernenergie, der dazu bestimmt ist, ein zweites Wärmeträgerfluid aufzunehmen, und einen Kernreaktor (201) umfassend, und
- einen ersten Wärmetauscher (1), der zwischen dem ersten Kreislauf (100) und dem Kreislauf zur Erzeugung von elektrischer Energie (300) angeordnet ist, konfiguriert, um die durch den ersten Kreislauf (100) erzeugte Wärme zum Kreislauf zur Erzeugung von elektrischer Energie (300) zu übertragen, und
- einen zweiten Wärmetauscher (2), der zwischen dem zweiten Kreislauf (200) und dem Kreislauf zur Erzeugung von elektrischer Energie (300) angeordnet ist, der konfiguriert ist, um die durch den zweiten Kreislauf (200) erzeugte Wärme zum Kreislauf zur Erzeugung von elektrischer Energie (300) zu übertragen,
wobei der zweite Wärmetauscher (2) in dem Kreislauf zur Erzeugung von elektrischer Energie (300) stromabwärts des ersten Wärmetauschers (1) angeordnet ist, sodass die Wärme des ersten Kreislaufs (100) dazu dient, das Arbeitsfluid vor dessen Durchlauf in dem zweiten Wärmetauscher (2) vorzuwärmen,
**dadurch gekennzeichnet, dass** das System einen dritten Wärmetauscher (3) umfasst, der in dem Kreislauf zur Erzeugung von elektrischer Energie (300) stromabwärts der Turbine (301) angeordnet ist, und eine Absorptionsmaschine (400), die zwischen dem ersten Kreislauf (100) und dem Kreislauf zur Erzeugung von elektrischer Energie (300) durch den dritten Wärmetauscher (3) angeordnet ist, wobei die Absorptionsmaschine einen Generator umfasst, der in dem ersten Kreislauf (100) angeordnet ist, um die von dem ersten Kreislauf (100) erzeugte Wärme in kalte Quelle für den dritten Wärmetauscher (3) umzuwandeln.

2. System nach dem vorstehenden Anspruch, wobei der Kreislauf zur Erzeugung von elektrischer Energie (300) ein Brayton-Zyklus ist und als Arbeitsfluid superkritisches Kohlendioxid umfasst.

3. System nach einem der vorstehenden Ansprüche, wobei der erste Kreislauf (100) einen Lagertank (103) für das erste kalte Wärmeträgerfluid umfasst, der stromaufwärts der solarthermischen Kollektoren (101) angeordnet ist, und/ oder einen Lagertank (102) für das erste erwärmte Wärmeträgerfluid, der stromabwärts der solarthermischen Kollektoren (101) angeordnet ist.

4. System nach einem der vorstehenden Ansprüche, einen Zwischenkreislauf (500) umfassend, die zwischen der Absorptionsmaschine (400) und dem Kreislauf zur Erzeugung von elektrischer Energie (300) angeordnet ist, wobei der Zwischenkreislauf (500) ein Kältelagermodul umfasst.

5. System nach dem vorstehenden Anspruch, wobei mindestens eine warme Quelle des Generators (401) der Absorptionsmaschine (400) das erste Wärmeträgerfluid des ersten Kreislaufs (100) ist.

6. System nach dem vorstehenden Anspruch, wobei der Generator (401) im ersten Kreislauf (100) stromabwärts der solarthermischen Kollektoren (101) angeordnet ist.

7. System nach einem der beiden vorstehenden Ansprüche, wobei der Generator (401) in dem ersten Kreislauf (100) parallel zum ersten Tauscher (1) angeordnet ist.

8. System nach einem der vorstehenden Ansprüche, wobei der Kernreaktor (201) ein Reaktor mit einer Leistung kleiner oder gleich 600 MWth ist.

9. System nach einem der vorstehenden Ansprüche, wobei der erste Kreislauf (100) zur Erzeugung von Wärme konfiguriert ist, um bei Temperaturen kleiner oder gleich 200°C zu funktionieren.

10. System nach einem der vorstehenden Ansprüche, eine Turbine umfassend, die in der Absorptionsmaschine (400) angeordnet ist, die dazu bestimmt ist, um eine mechanische Arbeit in Hinblick auf die Erzeugung von Strom zu erzeugen.

11. Verfahren zur Verwendung eines Systems nach einem der vorstehenden Ansprüche, die folgenden Schritte umfassend:
a. Vorwärmen des Arbeitsfluids durch den ersten Kreislauf (100) zur Erzeugung von Wärme aus Sonnenenergie zum Erreichen einer ersten Solltemperatur für den zweiten Kreislauf (200),
b. Erwärmen des Arbeitsfluids durch den zweiten Kreislauf (200) zur Erzeugung von Wärme aus Kernenergie zum Erreichen einer zweiten Solltemperatur für die Turbine (301),
c. Entspannen des Arbeitsfluids durch die Turbine (301),
d. Abkühlen des Arbeitsfluids durch eine kalte Quelle, die durch die Absorptionsmaschine (400) ausgehend von mindestens einem Teil der von dem ersten Kreislauf (100) erzeugten Wärme generiert wird,
e. Verdichten des Arbeitsfluids durch einen Kompressor (306, 304).

12. Verfahren zur Verwendung nach dem vorstehenden Anspruch, wobei die erste Solltemperatur niedriger als die zweite Solltemperatur ist.

13. Verfahren zur Verwendung nach einem der beiden vorstehenden Ansprüche, wobei die erste Solltemperatur kleiner oder gleich 200°C ist und/ oder die zweite Solltemperatur größer als 200°C und kleiner oder gleich 300°C ist.

## Claims

1. System for producing electrical energy comprising
- an electrical energy production circuit (300) by thermodynamic cycle intended to receive a working fluid and comprising a turbine (301),
- a first circuit (100) for producing heat from solar energy intended to receive a first heat transfer fluid and comprising thermal solar sensors (101),
- a second circuit (200) for producing heat from nuclear energy intended to receive a second heat transfer fluid and comprising a nuclear reactor (201), and
- a first heat exchanger (1) arranged between the first circuit (100) and the electrical energy production circuit (300) configured to transfer the heat produced by the first circuit (100) to the electrical energy production circuit (300), and
- a second heat exchanger (2) arranged between the second circuit (200) and the electrical energy production circuit (300) configured to transfer the heat produced by the second circuit (200) to the electrical energy production circuit (300),
where the second heat exchanger (2) is arranged on the electrical energy production circuit (300) downstream from the first exchanger (1) such that the heat from the first circuit (100) serves to preheat the working fluid prior to the passage thereof in the second exchanger (2),
**characterised in that** the system comprises a third heat exchanger (3) arranged on the electrical energy production circuit (300) downstream from the turbine (301) and an absorption machine (400) arranged between the first circuit (100) and the electrical energy production circuit (300) by the third heat exchanger (3), the absorption machine comprising a generator arranged on the first circuit (100) so as to convert the heat produced by the first circuit (100) into a cold source for the third heat exchanger (3).

2. System according to the preceding claim wherein the electrical energy production circuit (300) is a Brayton cycle and comprises supercritical carbon dioxide as a working fluid.

3. System according to any one of the preceding claims wherein the first circuit (100) comprises a storage tank (103) of the cold first heat transfer fluid arranged upstream from the thermal solar sensors (101) and/or a storage tank (102) of the heated first transfer fluid arranged downstream from the thermal solar sensors (101).

4. System according to any one of the preceding claims comprising an intermediate circuit (500) arranged between the absorption machine (400) and the electrical energy production circuit (300), the intermediate circuit (500) comprising a cold storage module.

5. System according to the preceding claim wherein at least one hot source of the generator (401) of the absorption machine (400) is the first heat transfer fluid of the first circuit (100).

6. System according to the preceding claim wherein the generator (401) is arranged on the first circuit (100) downstream from the thermal solar sensors (101).

7. System according to any one of the two preceding claims wherein the generator (401) is arranged on the first circuit (100) in parallel with the first exchanger (1).

8. System according to any one of the preceding claims wherein the nuclear reactor (201) is a reactor of power less than or equal to 600 MWth.

9. System according to any one of the preceding claims wherein the first heat production circuit (100) is configured to operate at temperatures less than or equal to 200°C.

10. System according to any one of the preceding claims comprising a turbine arranged on the absorption machine (400) intended to produce mechanical work with a view to electricity production.

11. Method for using a system according to any one of the preceding claims comprising the following steps:
a. Preheating of the working fluid by the first heat production circuit (100) by solar energy to reach a first set-point temperature for the second circuit (200),
b. Heating of the working fluid by the second heat production circuit (200) by nuclear energy to reach a second set-point temperature for the turbine (301),
c. Expansion of the working fluid by the turbine (301),
d. Cooling of the working fluid by the cold source generated by the absorption machine (400) using at least a portion of the heat produced by the first circuit (100),
e. Compression of the working fluid by a compressor (306, 304).

12. Method of use according to the preceding claim wherein the first set-point temperature is less than the second set-point temperature.

13. Method of use according to any one of the two preceding claims wherein the first set-point temperature is less than or equal to 200°C and/or the second set-point temperature is greater than 200° and less than or equal to 300°C.
